# EUROPEAN PATENT SPECIFICATION

(11) **EP 3 551 855 B1**
(45) Date of publication and mention of the grant of the patent: **16.06.2021**
(21) Application number: 17881431.5
(22) Date of filing: 30.11.2017
(51) Int. Cl.: F01N 3/08, F01N 9/00, F01N 3/20

(54) **AN EXHAUST SYSTEM AND A METHOD FOR CONTROLLING A FLOW OF EXHAUST GASES**
ABGASSYSTEM UND VERFAHREN ZUR STEUERUNG EINES STROMS VON ABGASEN
SYSTÈME D'ÉCHAPPEMENT ET PROCÉDÉ DE COMMANDE D'UN FLUX DE GAZ D'ÉCHAPPEMENT

(30) Priority: 12.12.2016 SE 1651633
(43) Date of publication of application: 16.10.2019
(73) Proprietor: Scania CV AB, 151 87 Södertälje (SE)
(72) Inventor: HÅKANSSON HOLST, Henrik, 141 69 Huddinge (SE); JOHANSSON, Thomas, 14931 Nynäshamn (SE); NILSSON, Robert, 640 60 Åkers Styckebruk (SE); WIKSTRÖM, Patrik, 151 32 Södertälje (SE)
(74) Representative: Scania CV AB
(86) International application number: PCT/SE2017/051191
(87) International publication number: WO 2018/111172

(56) References cited:
- EP-A1- 2 942 504
- WO-A1-2008/147492
- CN-A- 105 986 871
- JP-A- 2010 185 337
- US-A1- 2014 010 744
- US-A1- 2014 250 865
- US-A1- 2015 361 843
- US-A1- 2016 108 787

## Description

### TECHNICAL FIELD OF THE INVENTION

The present invention relates to an exhaust system of an internal combustion engine according to the preamble of claim 1, use of such an exhaust system in a marine engine, and a method for controlling a flow of exhaust gases within an exhaust system of an internal combustion engine.

### BACKGROUND AND PRIOR ART

In order to comply with current emission regulations, marine engines can be equipped with an aftertreatment system reducing the amount of nitrogen oxides (NOx) present in the exhaust gases. However, policies of marine insurance societies demand that if the marine engine is equipped with an aftertreatment system, measures must be taken so that the flow of exhaust gases from the engine is never choked. The reason for this is that marine engines are used for propulsion and auxiliary power generation at sea, where even a smaller reduction of available power may become a safety critical issue. Available engine power must therefore take precedence over emission level compliance.

Document WO 2008/147492 A1 discloses an exhaust systemutilizing a low-temperature oxidation catalyst. The system has a controller (46) configured to direct exhaust gas through the first oxidation catalyst when the exhaust gas temperature is below a threshold temperature and direct the exhaust gas through the second exhaust passageway when the exhaust gas temperature is above the threshold temperature.

Document JP 2010 185337 A discloses an exhaust gas cleaning system for a machine such as a marine vessel where a plurality of diesel generators are driven. In each of a plurality of power generating engines, an exhaust passage includes a main exhaust passage and a branched exhaust passage. In each of the exhaust passages, opening/closing valves are arranged in the main exhaust passage and the branched exhaust passage individually. An engine controller governing drive control of the respective power generating engines is constructed to execute opening/closing control of the respective opening/closing valves.

Document US 2016/0108787 A1 discloses a bypass exhaust pathway to allow gases to bypass the start catalyst of a vehicle. The system includes an electronic control unit that is used to control a first valve to be in a closed position or an open position based on an estimated temperature of the start catalyst. Document US 2014250865 A1 shows another exhaust system.

### SUMMARY OF THE INVENTION

It is a primary objective of the present invention to provide an, in at least some aspect, improved solution suitable for treating exhaust gases from a marine internal combustion engine. In particular, it is an objective to provide an exhaust system which on one hand fulfils emission regulations, and which on the other hand is not at risk of becoming choked, thereby compromising engine power. Another objective is to reduce the wear on the aftertreatment system which may arise due to operation at unfavourable operating conditions and which may lead to reduced reaction rate within the catalytic converter.

At least the primary objective is, according to a first aspect of the invention, achieved by a system according to claim 1.

According to one embodiment of the invention, the exhaust system further comprises a downstream temperature sensor configured to measure a downstream temperature of the exhaust gases immediately downstream of the at least one catalytic converter, and the control system is further configured to control the main port and the bypass port based on signals from the downstream temperature sensor. The downstream temperature can be used to detect whether an exothermic reaction is taking place within the catalytic converter. The system in this configuration comprises an upstream temperature sensor, in which case the main port and the bypass port can be operated based on a temperature difference between the upstream and downstream temperatures. For example, the exhaust system can be configured to fully open both ports if the downstream temperature exceeds the upstream temperature by more than a predetermined amount, or if the downstream temperature increases rapidly.

According to one embodiment of the invention, the control system is configured to control the main port and the bypass port according to predetermined control states including at least an onstream state in which the main port is fully open and the bypass port is fully closed, and a bypassed state in which the bypass port is fully open and the main port is fully closed. Also other control states not according to the invention may be included, such as control states in which the main port is controlled in dependence on e.g. the upstream temperature and/or the exhaust pressure. The main port may in some control states be partly open while the bypass port is fully open.

According to one example not according to the invention, the control system is configured to select a suitable control state in response to the results of a diagnostic test designed to detect conditions that require a change of control states. Such conditions may include high exhaust gas pressure, high or low temperatures upstream and/or downstream of the catalytic converter, preferably in combination with the amount of stored HC, etc.

According to one embodiment of the invention, the control system is further configured to, when switching between the control states, open one of said ports fully before starting to close the other one of said ports. This ensures a non-obstructed flow of exhaust gases through the exhaust system.

According to one embodiment of the invention, the predetermined control states further include an exotherm state, in which both ports are fully open. By fully opening both ports, the exhaust gases can pass freely through both of the aftertreatment system and the bypass conduit, and the relatively cold exhaust gases may thereby cool down the overheated catalytic converter.

According to one embodiment of the invention, the predetermined control states further include an evaporation state, in which the bypass port is fully open and the main port is controlled based on at least said amount of hydrocarbons currently stored in the catalytic converter. This allows the flow of exhaust gases through the aftertreatment system to be adjusted such that evaporation of HC stored in the catalytic converter can take place.

According to one embodiment of the invention, the exhaust system comprises mechanical means for putting the exhaust system in the bypassed state if a power to the control system is switched off. This ensures that exhaust gases can always pass freely through the bypass conduit if the power to the actuators is for some reason cut off.

According to one embodiment of the invention, the exhaust system further comprises a pressure sensor configured to measure an exhaust gas pressure upstream of the bypass conduit, wherein the control system is further configured to control at least the bypass port based on a signal from said exhaust gas pressure sensor. If the measured pressure does not coincide with the pressure as expected given the current operating conditions of the engine, the degree of openness of the bypass port and optionally the main port can be adjusted.

According to the invention, the bypass port and the main port are controllable using individually controllable valves. The valves should preferably provide possibilities for continuous adjustment between a fully open state and a fully closed state.

According to one embodiment of the invention, said valves are butterfly valves. This is a cost-efficient choice of valve that may be continuously adjusted between an open state and a closed state.

According to another aspect of the invention, the above mentioned primary objective is achieved by means of use of the proposed exhaust system as the exhaust system of a marine engine or a diesel generator.

According to another aspect of the invention, the above mentioned primary objective is achieved by means of a method for controlling according to claim 13.

Advantages and advantageous features of such a method appear from the above description of the proposed exhaust system.

Other advantageous features as well as advantages of the present invention will appear from the following description.

### BRIEF DESCRIPTION OF THE DRAWINGS

The invention will in the following be further described by means of example with reference to the appended drawings, wherein
Fig. 1 shows an exhaust system according to an embodiment of the invention,
Fig. 2 schematically shows the exhaust system from fig. 1 in more detail,
Fig. 3 is a diagram illustrating operation of the exhaust system, and
Fig. 4 is a flow chart illustrating a method according to the invention.

### DETAILED DESCRIPTION OF EMBODIMENTS OF THE INVENTION

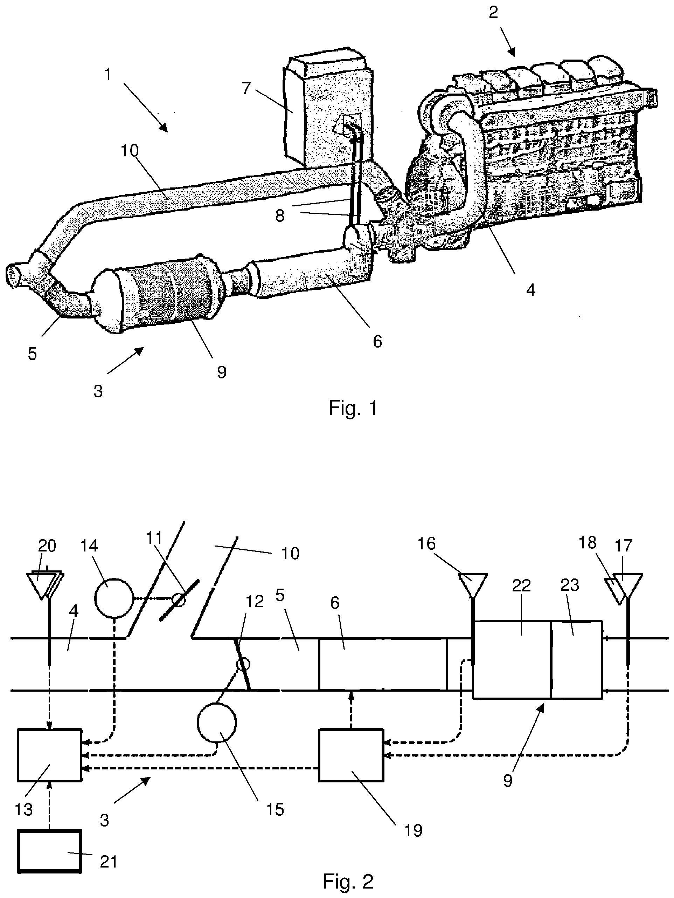

A schematic drawing of an exhaust system 1 of an internal combustion engine 2 according to an embodiment of the invention is shown in fig. 1. An aftertreatment system 3 is connected to the engine 2 via an engine exhaust conduit 4. The aftertreatment system 3 includes a main exhaust conduit 5 connected to the engine exhaust conduit 4, a mixer 6 to which urea, for example AdBlue® is injected from a urea storage tank 7 via urea supply conduits 8, and a catalytic converter 9. Furthermore, a bypass conduit 10 is connected to the exhaust conduit 4 upstream of the aftertreatment system 3, for allowing exhaust gases to bypass the aftertreatment system 3.

Fig. 2 shows the exhaust system from fig. 1 in more detail. As can be seen, the catalytic converter 9 here includes a selective catalytic reduction (SCR) unit 22 and an ammonia slip catalytic converter unit 23. An adjustable bypass valve 11 is positioned in an inlet to the bypass conduit 10 such that an adjustable bypass port is provided. In an inlet to the main exhaust conduit 5, an adjustable main valve 12 main port is positioned such that an adjustable main port is provided. Furthermore, a control system configured to control the main port via the main valve 12 and the bypass port via the bypass valve 11 is provided. The control system comprises a control unit 13 communicating with a bypass actuator 14, actuating the bypass valve 11, and with a main actuator 15, actuating the main valve 12. The actuators 14, 15 are here in the form of a communication area network (CAN) controlled electrical motors with the possibility to provide actual valve position feedback to the control system. The degree of openness of the bypass valve 11 and of the main valve 12 can thereby be controlled in independence of each other. No mechanical link is provided between the bypass valve 11 and the main valve 12.

An upstream temperature sensor 16 for measuring an upstream temperature T_up of the exhaust gases is provided immediately upstream of the catalytic converter 9. A downstream temperature sensor 17 for measuring a downstream temperature T_down of the exhaust gases is provided immediately downstream of the catalytic converter 9, wherein "immediately downstream" here means within one (1) meter from an outlet of the catalytic converter 9. Furthermore, a NOx sensor 18 is provided for measuring the amount of NOx gases downstream of the catalytic converter 9.

Data from the sensors 16, 17, 18 are communicated to an exhaust emission control unit 19 configured to communicate with the control unit 13 via a CAN-bus. The data are in the control unit 13 used to calculate an amount of urea to be supplied to the mixer 6, and the exhaust emission control unit 19 is thereafter used to control the supply of urea to the mixer 6.

The exhaust system further comprises an exhaust pressure sensor 20 located in the engine exhaust conduit 4, i.e. upstream of the bypass valve 11 and the main valve 12. Also various other sensors may be provided, such as e.g. a NOx sensor for sensing the amount of NOx gases in the exhaust gases. An engine coordinator unit 21, configured to communicate with the control unit 13 via a CAN-bus, provides the control unit 13 with data relating to current operating conditions of the internal combustion engine, such as engine rotational speed w and engine load.

The control system is configured to control the degree of openness of each of the main valve 12 and the bypass valve 11 based on, at least, an amount of hydrocarbons (HC) currently stored in the catalytic converter 9. The amount of HC stored in the catalytic converter 9 is determined in the control unit 13 based on the upstream temperature T_up as measured by the upstream temperature sensor 16 and on data relating to current operating conditions of the internal combustion engine 2, received via the engine coordinator unit 21. The amount of HC that the engine 2 emits at different operating conditions is typically known. It may e.g. be determined beforehand in a lab. The amount of HC emitted is included in a model used to determine the amount of HC currently stored in the catalytic converter 9. Another option not according to the invention is to include a sensor for sensing the amount of HC present in the exhaust gases. In an example not according to the invention the amount of HC may also be determined based on data relating to current operation conditions of the engine 2 together with a modelled temperature within the catalytic converter 9.

The control system is in the shown embodiment further configured to control the degree of openness of the valves 11, 12 based on signals from the downstream temperature sensor 17. If the downstream temperature T_down is larger than the upstream temperature T_up, or if the downstream temperature T_down grows rapidly, this may indicate that an exothermic reaction is taking place in the catalytic converter 9. A condition may be set such that T_down > T_up triggers an opening of the bypass valve 11 and a closing of the main valve 12. Of course, the condition may also be set such that the difference between the downstream temperature T_down and the upstream temperature T_up has to exceed a certain threshold.

The control system may be configured to operate the main valve 12 and the bypass valve 11 according to predetermined control states. Such predetermined control states may include:
- An onstream state in which the main valve 12 is fully open and the bypass valve 11 is fully closed. All exhaust gases passes by the catalytic converter 9. This is the normal mode of operation during propulsion and for auxiliary power applications running in emission-controlled areas.
- A bypassed state in which the bypass valve 11 is fully open and the main valve 12 is fully closed. This may be the default mechanical setting caused by valve return springs as the power to the actuators 14, 15 is turned off.
- An exotherm state in which the bypass valve 11 and the main valve 12 are both fully open.

Different sub-states may also be defined, such as an evaporation state during which evaporation of HC takes place, in which state the main valve 12 is slowly opened and controlled in response to sensor signals and engine operational data, while the bypass valve 11 is kept fully open.

The control system is configured to switch to a desired control state based on diagnostic detection functions carried out during operation of the engine 2. Such detection functions may be used to detect e.g. an exothermic reaction, excessive catalyst and urea injector temperatures, excessive engine exhaust pressure, etc.

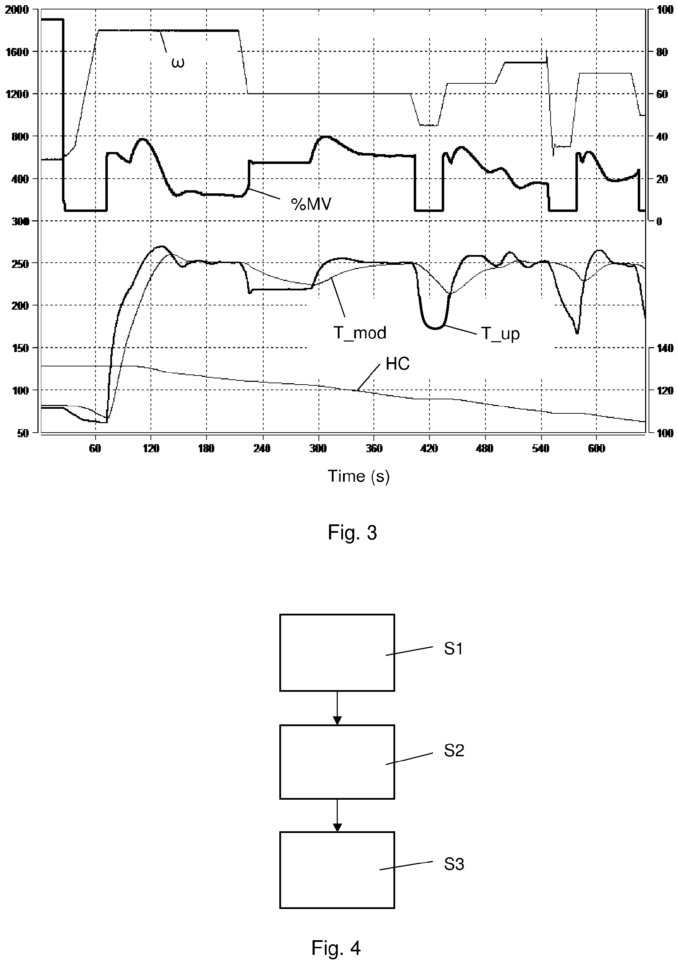

Fig. 3 shows an example of operation of an exhaust system 1 according to the invention in the evaporation state described above. The curves show engine rotational speed ω, degree of closure %MV of the main valve 12, modelled temperature T_mod within the SCR unit 22, upstream temperature T_up and amount of stored HC as functions of time. In the example, the engine 2 is initially running at a low engine rotational speed ω, the main valve 12 is closed, the modelled temperature T_mod as well as the upstream temperature T_up is low, while the amount of stored HC is relatively high. The bypass valve 11 is fully open during the illustrated time period.

After approximately 30 s, there is an abrupt increase in engine load and engine rotational speed ω. The mass flow of exhaust gases increases, which triggers an opening of the main valve 12.

After about 75 s, the upstream temperature T_up increases suddenly and the main valve 12 is therefore partly closed to limit the temperature increase within the catalytic converter 9. The degree of closure %MV of the main valve is thereafter controlled so as to reach a target temperature for HC evaporation. Typically, decreased engine load and rotational speed ω results in a more open main valve 12. Stored HC starts to evaporate from the catalytic converter 9 after approximately 110 s, when the temperature therein is sufficiently high.

A method according to an embodiment of the invention is schematically illustrated in fig. 4. In a step S1, various parameters including temperatures upstream and downstream of the catalytic converter 9 and pressure in the engine exhaust conduit 4 are sensed. Based on signals from at least the upstream temperature sensor 16 and on data relating to current operation conditions of the engine 2, the amount of HC stored in the catalytic converter 9 is determined in a step S2. In a step S3, the bypass valve 11 and the main valve 12 are controlled by means of the actuators 14, 15 based on the determined amount of HC stored in the catalytic converter 9. Of course, steps that include controlling the bypass valve 11 and/or the main valve 12 based on e.g. sensor signals from one or more of the sensors 16-18 described above may be included. Furthermore, a modelled temperature within the catalytic converter 9 may be used in the step of controlling the valves 11, 12.

The exhaust system according to the invention may comprise more than one catalytic converter, such as for example two SCR units connected in parallel downstream of the mixer, each SCR unit having an ammonia slip catalytic converter unit connected downstream.

The invention is of course not in any way restricted to the embodiments described above, but many possibilities to modifications thereof would be apparent to a person with skill in the art without departing from the scope of the invention as defined in the appended claims.

## Claims

1. An exhaust system (1) of an internal combustion engine (2), comprising:
- an engine exhaust conduit (4),
- an aftertreatment system (3) including a main exhaust conduit (5) connected to the engine exhaust conduit (4) and at least one catalytic converter (9),
wherein
the exhaust system (1) further comprises
- a bypass conduit (10) connected to the engine exhaust conduit (4) upstream of the aftertreatment system (3), the bypass conduit (10) allowing exhaust gases to bypass the aftertreatment system (3),
- an adjustable bypass port valve (11) positioned in an inlet to the bypass conduit (10) by means of which a flow of exhaust gases carried via the bypass conduit (10) can be controlled,
- an adjustable main port valve (12) by means of which a flow of exhaust gases carried via the aftertreatment system (3) can be controlled,
- an upstream temperature sensor (16) configured to measure an upstream temperature (T_up) of the exhaust gases immediately upstream of the at least one catalytic converter (9), wherein a control system is further configured to control the main port and the bypass port based on signals from said upstream temperature sensor (16), **characterized in that**
- the control system configured to determine an amount of hydrocarbons currently stored in the catalytic converter (9) based on the upstream temperature (T_up) and on data relating to current operating conditions of the internal combustion engine (2) and control the main port valve (12) and the bypass port valve (11) in independence of each other to allow exhaust gases to bypass the aftertreatment system (3) if an amount of hydrocarbons (HC) stored in the cataylic converter (9) is such that this is suitable in order not to cause choking or degeneration of the flow of exhaust gases, or an exothermic reaction, based on at least said amount of hydrocarbons (HC) and based on the upstream temperature (T_up) within the aftertreatment system (3).

2. The exhaust system according to claim 1, wherein said data relating to current operating conditions include at least engine load and engine rotational speed (ω).

3. The exhaust system according to any one of claims 1-2, further comprising a downstream temperature sensor (17) configured to measure a downstream temperature (T_down) of the exhaust gases immediately downstream of the at least one catalytic converter (9), wherein the control system is further configured to control the main port valve (12) and the bypass port valve (11) based on signals from the downstream temperature sensor (17).

4. The exhaust system according to any one of the preceding claims, wherein the control system is configured to control the main port valve (12) and the bypass port valve (11) according to predetermined control states including at least an onstream state in which the main port valve (12) is fully open and the bypass port valve (11) is fully closed, and a bypassed state in which the bypass port valve (11) is fully open and the main port valve (12) is fully closed.

5. The exhaust system according to claim 4, wherein the control system is further configured to, when switching between the control states, open one of said ports fully before starting to close the other one of said ports.

6. The exhaust system according to claim 4 or 5, wherein the predetermined control states further include an exotherm state, in which both ports are fully open.

7. The exhaust system according to any one of claims 4-6, wherein the predetermined control states further include an evaporation state, in which the bypass port valve (11) is fully open and the main port valve (12) is controlled based on at least said amount of hydrocarbons currently stored in the catalytic converter (9).

8. The exhaust system according to any one of claims 4-7, wherein the control system is configured to select a suitable control state in response to the results of a diagnostic test designed to detect conditions that require a change of control states.

9. The exhaust system according to any one of claims 4-8, wherein the exhaust system (1) comprises mechanical means for putting the exhaust system (1) in the bypassed state if a power to the control system is switched off.

10. The exhaust system according to any one of the preceding claims, further comprising a pressure sensor (20) configured to measure an exhaust gas pressure upstream of the bypass conduit (10), wherein the control system is further configured to control at least the bypass port valve (11) based on a signal from said exhaust gas pressure sensor (20).

11. The exhaust system according to any one of the preceding claims, wherein the bypass port valve (11) and the main port valve (12) are controllable using individually controllable valves (11, 12), preferably butterfly valves.

12. Use of the exhaust system (1) according to any one of the preceding claims as the exhaust system of a marine engine or a diesel generator.

13. A method for controlling a flow of exhaust gases within an exhaust system (1) of an internal combustion engine (2) according to any one of the preceding claims, comprising the steps of:
- determining an amount of hydrocarbons (HC) currently stored in the catalytic converter (9),
- determining an upstream temperature (T_up) within the aftertreatment system (3),
- based on at least said amount of hydrocarbons (HC) and said upstream temperature (T_up), controlling the adjustable bypass port valve (11),
- in independence of the bypass port valve (11) and based on at least said amount of hydrocarbons (HC) and said upstream temperature (T_up) controlling the adjustable main port valve (12).

## Patentansprüche

1. Abgasanlage (1) eines Verbrennungsmotors (2), mit:
- einer Motorabgasleitung (4),
- einem Nachbehandlungssystem (3), das eine mit der Motorabgasleitung (4) verbundene Hauptabgasleitung (5) und wenigstens einen Katalysator (9) enthält,
wobei
die Abgasanlage (1) ferner aufweist
- eine mit der Motorabgasleitung (4) stromaufwärts des Nachbehandlungssystems (3) verbundene Bypassleitung (10), wobei die Bypassleitung (10) es Abgasen gestattet, das Nachbehandlungssystem (3) zu umgehen,
- ein einstellbares Bypasseinlassöffnungsventil (11), das in einem Einlass für die Bypassleitung (10) angeordnet ist, mittels dessen ein durch die Bypassleitung (10) laufender Abgasstrom gesteuert werden kann,
- ein einstellbares Haupteinlassöffnungsventil (12), mittels dessen ein durch das Nachbehandlungssystem (3) laufender Abgasstrom gesteuert werden kann,
- einen stromaufwärtigen Temperatursensor (16), der dazu eingerichtet ist, eine stromaufwärtige Temperatur (T_up) der Abgase unmittelbar stromaufwärts des wenigstens einen Katalysators (9) zu messen, wobei eine Steuereinrichtung ferner dazu eingerichtet ist, die Haupteinlassöffnung und die Bypasseinlassöffnung basierend auf Signalen von dem stromaufwärtigen Temperatursensor (16) zu steuern,
**dadurch gekennzeichnet, dass** die Steuereinrichtung dazu eingerichtet ist, eine aktuell in dem Katalysator (9) gespeicherte Kohlenwasserstoffmenge zu ermitteln basierend auf der stromaufwärtigen Temperatur (T_up) und auf Daten, die die aktuellen Betriebsbedingungen des Verbrennungsmotors (2) betreffen, und das Haupteinlassöffnungsventil (12) und das Bypasseinlassöffnungsventil (11) unabhängig voneinander dazu zu steuern, es Abgasen zu gestatten, das Nachbehandlungssystem (3) zu umgehen, falls eine in dem Katalysator (9) gespeicherte Menge an Kohlenwasserstoffen (HC) derart ist, dass dies basierend auf zumindest der Menge an Kohlenwasserstoffen (HC) und basierend auf der stromaufwärtigen Temperatur (T_up) innerhalb des Nachbehandlungssystems (3) dazu geeignet ist, keine Drosselung oder Degeneration des Abgasstroms oder eine exotherme Reaktion zu verursachen.

2. Abgasanlage nach Anspruch 1, bei der die die aktuellen Betriebsbedingungen betreffenden Daten zumindest eine Motorlast und eine Motordrehzahl (ω) umfassen.

3. Abgasanlage nach einem der Ansprüche 1 bis 2, ferner umfassend einen stromabwärtigen Temperatursensor (17), der dazu eingerichtet ist, eine stromabwärtige Temperatur (T_down) der Abgase unmittelbar stromabwärts des wenigstens einen Katalysators (9) zu messen, wobei die Steuereinrichtung ferner dazu eingerichtet ist, das Haupteinlassöffnungsventil (12) und das Bypasseinlassöffnungsventil (11) basierend auf Signalen von dem stromabwärtigen Sensor (17) zu steuern.

4. Abgasanlage nach einem der vorhergehenden Ansprüche, bei der die Steuereinrichtung dazu eingerichtet ist, das Haupteinlassöffnungsventil (12) und das Bypasseinlassöffnungsventil (11) gemäß vorbestimmter Steuerzustände zu steuern, die zumindest einen Durchströmungszustand, in dem das Haupteinlassöffnungsventil (12) vollständig geöffnet ist und das Bypasseinlassöffnungsventil (11) vollständig geschlossen ist, und einen Bypasszustand umfassen, in dem das Bypasseinlassöffnungsventil (11) vollständig geöffnet ist und das Haupteinlassöffnungsventil (12) vollständig geschlossen ist.

5. Abgasanlage nach Anspruch 4, bei der die Steuereinrichtung ferner dazu eingerichtet ist, beim Umschalten zwischen den Steuerzuständen eine der genannten Einlassöffnungen vollständig zu öffnen, bevor mit einem Schließen der anderen der genannten Einlassöffnungen begonnen wird.

6. Abgasanlage nach Anspruch 4 oder 5, bei der die vorbestimmten Steuerzustände ferner einen exothermen Zustand umfassen, in dem beide Einlassöffnungen vollständig offen sind.

7. Abgasanlage nach einem der Ansprüche 4 bis 6, bei der die vorbestimmten Steuerzustände ferner einen Verdampfungszustand umfassen, in dem das Bypasseinlassöffnungsventil (11) vollständig offen ist und das Haupteinlassöffnungsventil (12) basierend auf zumindest der aktuell in dem Katalysator (9) gespeicherten Kohlenwasserstoffmenge gesteuert wird.

8. Abgasanlage nach einem der Ansprüche 4 bis 7, bei der die Steuereinrichtung dazu eingerichtet ist, einen passenden Steuerzustand auszuwählen in Reaktion auf die Ergebnisse eines Diagnosetests, der zum Erfassen von Bedingungen ausgelegt ist, die eine Änderung von Steuerzuständen erfordern.

9. Abgasanlage nach einem der Ansprüche 4 bis 8, bei der die Abgasanlage (1) mechanische Mittel zum Bringen der Abgasanlage (1) in den Bypasszustand aufweist, falls eine Energieversorgung der Steuereinrichtung abgeschaltet ist.

10. Abgasanlage nach einem dem vorhergehenden Ansprüche, ferner umfassend einen Drucksensor (20), der dazu eingerichtet ist, einen Abgasdruck stromaufwärts der Bypassleitung (10) zu messen, wobei die Steuereinrichtung ferner dazu eingerichtet ist, zumindest das Bypasseinlassöffnungsventil (11) basierend auf einem Signal von dem Abgasdrucksensor (20) zu steuern.

11. Abgasanlage nach einem der vorhergehenden Ansprüche, bei der das Bypasseinlassöffnungsventil (11) und das Haupteinlassöffnungsventil (12) durch Verwendung individuell steuerbarer Ventile (11, 12), vorzugsweise Drosselventile, steuerbar sind.

12. Verwendung der Abgasanlage (1) nach einem der vorhergehenden Ansprüche als die Abgasanlage eines Schiffsmotors oder eines Dieselgenerators.

13. Verfahren zur Steuerung eines Abgasstroms innerhalb einer Abgasanlage (1) eines Verbrennungsmotors (2) nach einem der vorhergehenden Ansprüche, umfassend die Schritte:
- Ermitteln einer aktuell in dem Katalysator (9) gespeicherten Menge von Kohlenwasserstoffen (HC),
- Ermitteln einer stromaufwärtigen Temperatur (T_up) innerhalb des Nachbehandlungssystems (3),
- Steuern des einstellbaren Bypasseinlassöffnungsventils (11) basierend auf zumindest der Menge von Kohlenwasserstoffen (HC) und der stromaufwärtigen Temperatur (T_up),
- Steuern des einstellbaren Haupteinlassöffnungsventils (12) unabhängig von dem Bypasseinlassöffnungsventil (11) und basierend auf zumindest der Menge von Kohlenwasserstoffen (HC) und der stromaufwärtigen Temperatur (T_up).

## Revendications

1. Système d'échappement (1) d'un moteur à combustion interne (2), comprenant :
- un conduit d'échappement de moteur (4),
- un système de post-traitement (3) incluant un conduit d'échappement principal (5) connecté au conduit d'échappement de moteur (4) et au moins un convertisseur catalytique (9),
dans lequel
le système d'échappement (1) comprend en outre
- un conduit de dérivation (10) connecté au conduit d'échappement de moteur (4) en amont du système de post-traitement (3), le conduit de dérivation (10) permettant aux gaz d'échappement de contourner le système de post-traitement (3),
- une vanne d'orifice de dérivation réglable (11) positionnée dans une entrée du conduit de dérivation (10) au moyen de laquelle un flux de gaz d'échappement transporté via le conduit de dérivation (10) peut être régulé,
- une vanne d'orifice principal réglable (12) au moyen de laquelle un flux de gaz d'échappement transporté via le système de post-traitement (3) peut être régulé,
- un capteur de température en amont (16) configuré pour mesurer une température en amont (T_up) des gaz d'échappement immédiatement en amont de l'au moins un convertisseur catalytique (9), dans lequel un système de régulation est en outre configuré pour réguler l'orifice principal et l'orifice de dérivation sur la base des signaux provenant dudit capteur de température en amont (16),
**caractérisé en ce que**
- le système de régulation configuré pour déterminer une quantité d'hydrocarbures actuellement stockés dans le convertisseur catalytique (9) sur la base de la température en amont (T_up) et sur des données relatives aux conditions de fonctionnement actuelles du moteur à combustion interne (2) et réguler la vanne d'orifice principal (12) et la vanne d'orifice de dérivation (11) indépendamment l'une de l'autre pour permettre aux gaz d'échappement de contourner le système de post-traitement (3) si une quantité d'hydrocarbures (HC) stockée dans le convertisseur catalytique (9) est telle qu'elle est adaptée à ne pas provoquer l'engorgement ou la dégradation du flux de gaz d'échappement, ou une réaction exothermique, sur la base d'au moins ladite quantité d'hydrocarbures (HC) et sur la base de la température en amont (T_up) au sein du système de post-traitement (3).

2. Système d'échappement selon la revendication 1, dans lequel lesdites données relatives aux conditions de fonctionnement actuelles incluent au moins la charge du moteur et la vitesse de rotation du moteur (ω).

3. Système d'échappement selon l'une quelconque des revendications 1 à 2, comprenant en outre un capteur de température en aval (17) configuré pour mesurer une température en aval (T_down) des gaz d'échappement immédiatement en aval de l'au moins un convertisseur catalytique (9), dans lequel le système de régulation est en outre configuré pour réguler la vanne d'orifice principal (12) et la vanne d'orifice de dérivation (11) sur la base de signaux provenant du capteur de température en aval (17).

4. Système d'échappement selon l'une quelconque des revendications précédentes, dans lequel le système de régulation est configuré pour réguler la vanne d'orifice principal (12) et la vanne d'orifice de dérivation (11) selon des états de régulation prédéterminés incluant au moins un état en amont dans lequel la vanne d'orifice principal (12) est complètement ouverte et la vanne d'orifice de dérivation (11) est complètement fermée, et un état de dérivation dans lequel la vanne d'orifice de dérivation (11) est complètement ouverte et la vanne d'orifice principal (12) est complètement fermée.

5. Système d'échappement selon la revendication 4, dans lequel le système de régulation est en outre configuré pour, lors de la permutation entre les états de régulation, ouvrir complètement l'un desdits orifices avant de commencer à fermer l'autre desdits orifices.

6. Système d'échappement selon la revendication 4 ou 5, dans lequel les états de régulation prédéterminés incluent en outre un état exothermique, dans lequel les deux orifices sont complètement ouverts.

7. Système d'échappement selon l'une quelconque des revendications 4 à 6, dans lequel les états de régulation prédéterminés incluent en outre un état d'évaporation, dans lequel la vanne d'orifice de dérivation (11) est complètement ouverte et la vanne d'orifice principale (12) est régulée sur la base d'au moins ladite quantité d'hydrocarbures actuellement stockée dans le convertisseur catalytique (9).

8. Système d'échappement selon l'une quelconque des revendications 4 à 7, dans lequel le système de régulation est configuré pour sélectionner un état de régulation approprié en réponse aux résultats d'un test de diagnostic conçu pour détecter des conditions qui nécessitent un changement d'états de régulation.

9. Système d'échappement selon l'une quelconque des revendications 4 à 8, dans lequel le système d'échappement (1) comprend des moyens mécaniques pour mettre le système d'échappement (1) dans l'état dérivé si une puissance vers le système de régulation est coupée.

10. Système d'échappement selon l'une quelconque des revendications précédentes, comprenant en outre un capteur de pression (20) configuré pour mesurer une pression de gaz d'échappement en amont du conduit de dérivation (10), dans lequel le système de régulation est en outre configuré pour réguler au moins la vanne d'orifice de dérivation (11) sur la base d'un signal provenant dudit capteur de pression de gaz d'échappement (20).

11. Système d'échappement selon l'une quelconque des revendications précédentes, dans lequel la vanne d'orifice de dérivation (11) et la vanne d'orifice principal (12) peuvent être régulées à l'aide des vannes pouvant être régulées individuellement (11, 12), de préférence des vannes papillon.

12. Utilisation du système d'échappement (1) selon l'une quelconque des revendications précédentes lorsque le système d'échappement d'un moteur marin ou d'un générateur diesel.

13. Procédé pour réguler un flux de gaz d'échappement au sein d'un système d'échappement (1) d'un moteur à combustion interne (2) selon l'une quelconque des revendications précédentes, comprenant les étapes de :
- la détermination d'une quantité d'hydrocarbures (HC) actuellement stockée dans le convertisseur catalytique (9),
- la détermination d'une température en amont (T_up) au sein du système de post-traitement (3),
- sur la base d'au moins ladite quantité d'hydrocarbures (HC) et de ladite température en amont (T_up), la régulation de la vanne d'orifices de dérivation réglable (11),
- de manière indépendante de la vanne d'orifices de dérivation (11) et sur la base d'au moins ladite quantité d'hydrocarbures (HC) et de ladite température en amont (T_up), la régulation de la vanne d'orifice principal réglable (12).
